# EUROPÄISCHE PATENTANMELDUNG

(11) **EP 1 253 532 A1**
(43) Veröffentlichungstag der Anmeldung: **30.10.2002**
(21) Anmeldenummer: 01110232.4
(22) Anmeldetag: 25.04.2001
(51) Int. Cl.: G06F 17/40

(54) **Verfahren zur Verarbeitung von Daten und Datenverarbeitungsanlage**

(71) Anmelder: SIEMENS AKTIENGESELLSCHAFT, 80333 München (DE)
(72) Erfinder: Goeddemeier, Ulrich, 76137 Karlsruhe (DE); Jany, Bernhard, 90530 Wendelstein (DE); Kulzer, Heinrich, 90475 Nuernberg (DE); Prechtl, Manfred, 92507 Nabburg (DE); Rupprecht, Georg, 90409 Nuernberg (DE); Schulz, Dietmar, 90574 Rosstal (DE)

(57) **Zusammenfassung**

Für einen effektiv genutzten Speicherplatz bei gleichzeitiger Reduzierung der Gesamtlaufzeit eines Datenverarbeitungsprogramms ist erfindungsgemäß ein Verfahren zur Verarbeitung von Daten (D) einer Datenverarbeitungsanlage (1) mit einem Datenverarbeitungsprogramm (2) vorgesehen, welches zur Bearbeitung von Standardfunktionen eine Mehrzahl von Funktionsbausteinen (FB1 bis FBn) umfasst, wobei mindestens einer der Funktionsbausteine (FB1, FB3) um mindestens eine Funktion derart erweitert wird, dass von dem betreffenden Funktionsbaustein (FB1, FB3) ein weiterer Funktionsbaustein (FB2, FB4) zur Bearbeitung von erweiterten Funktionen aufgerufen wird, wobei beim Aufruf des Funktionsbausteins (FB1, FB3) zu dessen Bearbeitung erforderliche Daten (D(FB1), D(FB3)) und zur Bearbeitung des weiteren Funktionsbausteins (FB2, FB4) erforderliche Daten (D(FB2), D(FB4)) mittels des Datenverarbeitungsprogramms (2) bausteinabhängig in getrennten Speicherplätzen (S(FB1) bis S(FB4)) hinterlegt werden.

## Beschreibung

Die Erfindung betrifft ein Verfahren zur Verarbeitung von Daten einer Datenverarbeitungsanlage mit einem Datenverarbeitungsprogramm zur Automatisierung einer technischen Anlage, z. B. einer Fertigungsanlage, einer Werkzeugmaschine oder eines Messsystems. Sie betrifft weiter eine Datenverarbeitungsanlage.

Üblicherweise umfasst ein zur Steuerung oder Automatisierung einer technischen Anlage vorgesehenes Datenverarbeitungsprogramm beispielsweise ein Betriebsprogramm, ein Hauptprogramm oder eine Hauptroutine, in welchem im wesentlichen sequentiell eine Anzahl von Steuerungs- und/oder Datenverarbeitungsbefehlen für die technische Anlage abgearbeitet werden. Aus diesem Hauptprogramm werden bedarfsweise, z. B. zyklisch oder ereignisgesteuert, sogenannte Subroutinen oder Funktionsbausteine aufgerufen. Diese Funktionsbausteine übernehmen in der Art von Modulen bestimmte abgeschlossene Steuerungs- und/oder Regelungsfunktionen. Je nach Art, Aufbau und Komplexität des Datenverarbeitungsprogramms wird aus einem solchen Funktionsbaustein heraus in der Art einer Subsubroutine ein weiterer Funktionsbaustein, auch Unterfunktionsbaustein genannt, aufgerufen.

Die Funktionsbausteine und die Unterfunktionsbausteine sind sogenannte Software-Module, die mit einem "Gedächtnis" (im Rahmen der vorliegenden Software-Konstellation auch als Instanz bezeichnet) ausgerüstet sind. Dieses "Gedächtnis", das die Funktion eines integrierten Datenspeichers erfüllt, sorgt dafür, dass der entsprechende Funktionsbaustein bei erneutem Aufruf nach einer vorangegangenen Aktion vom Status her mit denselben Daten beginnt, mit denen er seine vorige Aktion abgeschlossen hat. Jeder Funktionsbaustein oder Unterfunktionsbaustein ist dabei üblicherweise hinsichtlich der genannten Instanz durch diejenigen Daten oder Parameter charakterisiert, die beim Starten des Funktionsbausteins und/oder Unterfunktionsbausteins an diesen zu übergeben sind, und die beim Beenden des Funktionsbausteins bzw. Unterfunktionsbausteins von diesem für die ihn aufrufenden Software-Module, z. B. die nachgeschalteten zugehörigen Unterfunktionsbausteine, zum Auslesen bereitgestellt werden. Beispielsweise könnte bei einem eine Stromquelle repräsentierenden Funktionsbaustein als Eingangsparameter ein erster Parameter vorgesehen sein, der eine einzustellende Stromstärke repräsentiert, und ein zweiter Parameter, der einen Startbefehl zum Einstellen der genannten Stromstärke ausdrückt. Als Ausgangsparameter könnte hingegen die aktuell eingestellte Stromstärke vorgesehen sein.

Eine Verschachtelung der Funktionsbausteine mittels der Unterfunktionsbausteine ermöglicht dabei die Einbindung von sicherheitsrelevanten Funktionen. Beispielsweise könnte die beschriebene Stromquelle zusätzlich mit einer Notausfunktion oder Zeitfunktion betrieben werden. Der für die Stromquelle daraus resultierende Funktionsbaustein weist dabei im Vergleich zum standardmäßig vorgesehenen Funktionsbaustein zusätzliche Eingangs- und Ausgangsparameter auf. Dies wird üblicherweise dadurch realisiert, dass ein "erweitertes" Unterprogramm für das betroffene Bauteil erstellt wird, das den standardmäßig vorgesehenen Funktionsbaustein als Unterfunktionsbaustein zur Bearbeitung der eigentlich vorgesehenen Funktionen in der Art einer Kernfunktion einbettet. Im Fall der Stromquelle würde der Funktionsbaustein somit selbständig im Rahmen neu zu erstellender Unterprogramme die Notausfunktion oder den Zeitzähler bereitstellen und abarbeiten. Somit wird bei Ausführung einer der Funktionen, z. B. standardmäßige Funktion wie Einstellung der Stromstärke oder zusätzliche Funktion wie Notausfunktion, der neu erstellte Funktionsbaustein in der Art einer Subsubroutine auf den in ihn integrierten standardmäßigen Funktionsbaustein für die Stromquelle zurückgreifen.

Programmiertechnisch würde der solchermaßen modifizierte "komfortable" Funktionsbaustein für die Stromquelle nach außen hin jedoch ausschließlich durch seine Eingangs- und Ausgangsparameter charakterisiert sein. Falls der betreffende Funktionsbaustein zur Einstellung einer Stromstärke angesprochen würde, so würde der Funktionsbaustein den Sollwert für die Stromstärke zunächst aufnehmen, zwischenspeichern und schließlich bei Aufruf des in ihn integrierten standardmäßigen Funktionsbausteins für die Stromquelle an diesen weitergeben. Ein derartiges Datenverarbeitungsprogramm mit Funktionsbausteinen und Unterfunktionsbausteinen wird insbesondere in einer vergleichsweise komplexen technischen Anlage eingesetzt.

Nachteilig dabei ist, dass durch die große Anzahl von Eingangs- und Ausgangsparametern und deren Art der Verarbeitung in Form von mehrfachem Lesen, Schreiben, Weitergeben ein vergleichsweise großer Speicherplatz von Nöten ist. Insbesondere durch eine derartige strukturierte oder geschachtelte Programmierung mit Unterprogrammaufrufen kommt es zur Weitergabe von erforderlichen Eingangs- und Ausgangsparametern von einer zur nächsten Aufrufebene, meist über mehrere Aufrufebenen hinweg. Dies geschieht häufig ohne eine Modifikation der über mehrere Aufrufebenen weitergereichten Parameter. Mit zunehmender Automatisierung und Komplexität der technischen Anlage nimmt die Anzahl der Aufrufebenen und somit die Anzahl der Parameterübergaben zu. Demzufolge ist die erforderliche Weitergabe der Parameter von einer Aufrufebene zur nächsten mit einer Verlängerung der Programmlaufzeit verbunden und speicherintensiv.

Aufgabe der Erfindung ist es daher, ein Verfahren zur Verarbeitung von Daten einer Datenverarbeitungsanlage anzugeben, bei dem in besonders einfacher Art und Weise eine Bearbeitung von Daten, insbesondere von Eingangs- und Ausgangsparametern, in geschachtelten Funktionsbausteinen ermöglicht ist. Weiterhin soll eine zur Durchführung des Verfahrens besonders geeignete Datenverarbeitungsanlage angegeben werden.

Die erstgenannte Aufgabe wird erfindungsgemäß gelöst durch ein Verfahren zur Verarbeitung von Daten einer Datenverarbeitungsanlage mit einem Datenverarbeitungsprogramm, welches zur Bearbeitung von Standardfunktionen eine Mehrzahl von Funktionsbausteinen umfasst, wobei mindestens einer der Funktionsbausteine ein Unterfunktionsbaustein oder Unterfunktionsbaustein zur Bearbeitung von einer Kernfunktion zugeordnet ist, wobei beim Aufruf des Funktionsbausteins für diesen bestimmten Eingangsdaten und für den Unterfunktionsbaustein bestimmte Eingangsdaten mittels des Datenverarbeitungsprogramms jeweils bausteinabhängig in getrennten Speicherplätzen hinterlegt werden.

Hierdurch ist eine zeitsparende und speicherplatzreduzierte Bearbeitung von Daten, insbesondere von Betriebsparametern, Eingangs- oder Ausgangsparametern, ermöglicht. Dies wird vorliegend dadurch erreicht, dass nicht im Rahmen des umgebenden Funktionsbausteins, sondern ausschließlich im Rahmen des in der Art einer Subsubroutine integrierten Unterfunktionsbausteins relevante Daten oder Parameter sofort an einen für diesen relevanten Speicherplatz geschrieben werden.

Die Erfindung geht dabei von der Überlegung aus, dass die zum Aufruf eines Funktionsbausteins mit integriertem Unterfunktionsbaustein erforderlichen Daten, wie z. B. Betriebsparameter, Eingangs- oder Ausgangsparameter, nicht von Funktionsbaustein zu Unterfunktionsbaustein und ggf. zum Unter-Unterfunktionsbaustein weitergereicht werden sollten, sondern vielmehr nur jene die Ablauffolge oder Kette durchlaufen, welche innerhalb des durchlaufenden Funktions- bzw. Unterfunktionsbausteins modifiziert, d. h. geändert, werden. Somit ist für die Weitergabe bzw. Zwischenspeicherung der Daten auf einem betreffenden Speicherplatz deren Modifizierung bzw. deren Erfordernis für die Ausführung des betreffenden Funktionsbausteins bzw. Unterfunktionsbausteins maßgeblich. Dazu werden die jeweils nur für einen Funktionsbaustein bzw. einen Unterfunktionsbaustein relevanten Daten berücksichtigt und in einem dem betreffenden Funktionsbaustein bzw. Unterfunktionsbaustein zugeordneten Speicherplatz hinterlegt. Mit anderen Worten: Die das Datenverarbeitungsprogramm charakterisierenden Daten werden in Abhängigkeit von deren Relevanz für die Funktionsbausteine in bausteinspezifischen Speichern hinterlegt. Hierdurch ist ein zum Zwischenspeichern der Daten erforderlicher Speicherplatz besonders gering gehalten. Darüber hinaus ist ein Durchlaufen der Daten aller Funktionsbausteine und Unterfunktionsbausteine des Datenverarbeitungsprogramms sicher vermieden. Somit verkürzt sich durch den Direktzugriff der betreffenden Funktionsbausteine auf die Daten im bausteinspezifischen Datenspeicher die insgesamt erforderliche Laufzeit des Datenverarbeitungsprogramms.

Zweckmäßigerweise werden die Daten mittels des Datenverarbeitungsprogramms mit einem zugehörigen Adresszeiger verknüpft. Hierdurch ist in einfacher Art und Weise ermöglicht, dass die Daten oder Parameter anhand des Adresszeigers direkt in den Speicherplatz für den integrierten Funktionsbaustein geschrieben werden. Dazu wird beispielsweise an geeigneter Stelle, insbesondere im eigentlichen Datenverarbeitungsprogramm ( auch Hauptprogramm genannt), bei Aufruf des Funktionsbausteins, bei dem die von diesem erwarteten Daten, z. B. Eingangsdaten, an den Funktionsbaustein übertragen werden, ein Adresszeiger oder eine Zieladresse bei den zu übertragenden Daten vermerkt. Somit ist sicher vermieden, dass die Daten mehrfach, nämlich zunächst in einen den umgebenden Funktionsbaustein zugewiesenen Speicherplatz und später von dort in den dem integrierten Funktionsbaustein, d. h. dem Unterfunktionsbaustein, zugewiesenen Speicherplatz, übertragen werden.

Vorteilhafterweise werden mittels des Datenverarbeitungsprogramms beim Aufruf des Funktionsbaustein oder des Unterfunktionsbausteins die Daten anhand des zugehörigen Adresszeigers bausteinabhängig in einem dem Funktionsbaustein bzw. dem Unterfunktionsbaustein zugehörigen Speicherplatz hinterlegt. Dabei ist der Adresszeiger derart gewählt, dass dieser denjenigen Parametern oder Daten, die im umgebenden Funktionsbaustein bearbeitet werden, eine diesem zugeordnete Adresse zuweist. Bevorzugtermassen werden mittels des Datenverarbeitungsprogramms die Daten des Unterfunktionsbausteins direkt in einem dem Unterfunktionsbaustein zugehörigen Speicherplatz hinterlegt. Dazu wird denjenigen Daten, die im in der Art einer Subsubroutine integrierten Unterfunktionsbaustein bearbeitet werden, eine diesem integrierten Unterfunktionsbaustein zugeordnete Adresse oder Speicherplatz zugewiesen.

Die zweitgenannte Aufgabe wird erfindungsgemäß gelöst durch eine Datenverarbeitungsanlage mit einem Datenverarbeitungsprogramm, welches zur Bearbeitung von Standardfunktionen eine Mehrzahl von Funktionsbausteinen umfasst, wobei mindestens einer der Funktionsbausteine einen weiteren Funktionsbaustein oder Unterfunktionsbaustein zur Funktionserweiterung aufweist, wobei mittels des Datenverarbeitungsprogramms beim Aufruf des betreffenden Funktionsbausteins oder des Unterfunktionsbausteins Daten zur Bearbeitung des betreffenden Funktionsbausteins bzw. Daten des Unterfunktionsbaustein bausteinabhängig in getrennten Speicherplätzen hinterlegt werden.

Hierdurch werden aufwendige und komplexe Aufrufe und Befehle zum Kopieren der Daten von einem Baustein zum anderen Baustein sicher vermieden. Eine derartige Datenverarbeitungsanlage weist somit kurze Programmlaufzeiten auf. Darüber hinaus ist der Platz zum Zwischenspeichern von bausteinabhängigen Daten oder Betriebsparametern reduziert, wodurch die Datenverarbeitungsanlage einen verfügbaren Speicherplatz besonders effektiv nutzt.

Die mit der Erfindung erzielten Vorteile bestehen insbesondere darin, dass durch eine bausteinspezifische Übergabe der Daten, insbesondere der bausteinrelevanten Ein- und Ausgangsparameter, diese für eine Bearbeitung oder Ausführung eines Funktionsbausteins oder Unterfunktionsbausteins schnellstmöglich ausgegeben und direkt dem betreffenden Baustein zur Verfügung gestellt werden. Darüber hinaus ist durch die bausteinspezifische Speicherung der Eingangs- und Ausgangsparameter der Speicherplatz effektiv nutzbar. Insbesondere werden lange Zugriffszeiten zum Auffinden bzw. Weiterreichen unveränderter Parameter vermieden, wodurch wiederum die Gesamtlaufzeit des Datenverarbeitungsprogramms gering gehalten ist.

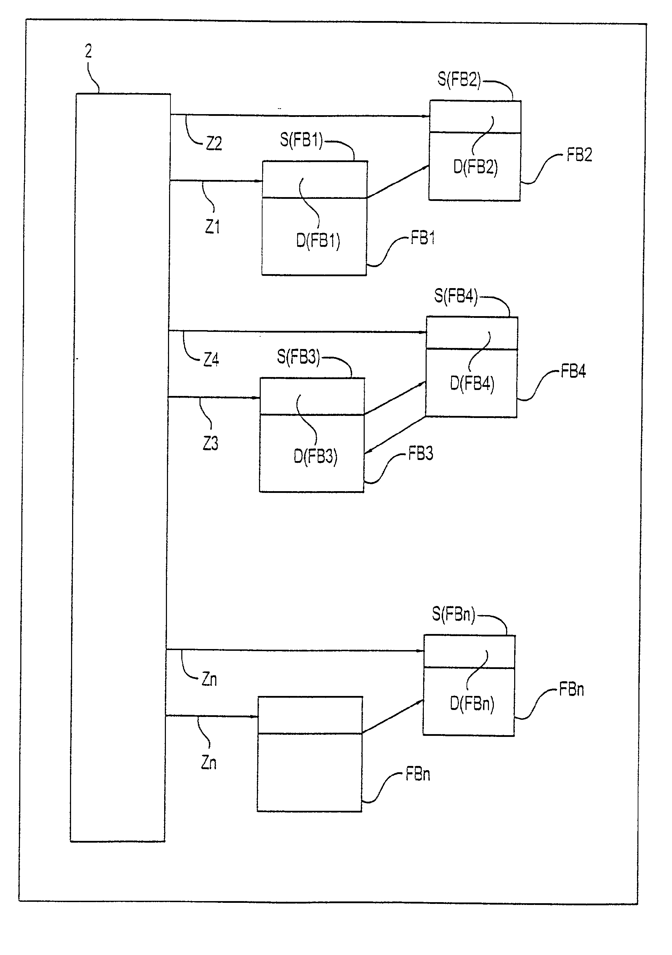

Ein Ausführungsbeispiel der Erfindung wird anhand einer Zeichnung näher erläutert. Darin zeigt die Figur eine Datenverarbeitungsanlage mit einem Datenverarbeitungsprogramm.

Die Datenverarbeitungsanlage 1 weist ein Datenverarbeitungsprogramm 2 auf, welches zur Bearbeitung von Standardfunktionen eine Mehrzahl von Funktionsbausteinen FB1 bis FBn umfasst. Die Datenverarbeitungsanlage 1 kann ein Personalcomputer oder eine speicherprogrammierbare Steuerung (kurz SPS genannt) sein. Das Datenverarbeitungsprogramm 2 (auch Betriebsprogramm oder Hauptprogramm genannt) ist zur Steuerung und/oder Regelung einer komplexen technischen Anlage vorgesehen. Bei Anwendungen in der SPS-Technik ist das Datenverarbeitungsprogramm 2 zum Zeitpunkt der Compilierung in seiner Gesamtheit durch mittels Software realisierte Steuerungsund/oder Regelungsfunktionen bestimmt. Die Funktionsbausteine FB1 bis FBn führen dabei in der Art einer Subroutine abgeschlossene Steuerungs- und/oder Regelungsfunktionen aus. Die Struktur des Datenverarbeitungsprogramms 2 kann dabei derart geschachtelt sein, dass aus einem Funktionsbaustein FB1 heraus in der Art einer Subsubroutine ein weiterer Funktionsbaustein FB2 aufgerufen wird. Somit sind zum Compilierungszeitpunkt sämtliche das Datenverarbeitungsprogramm 2 umfassende Funktionsbausteine FB1 bis FBn durch ihre Funktion, durch ihre Ablauffolge und durch ihre Verschachtelung bestimmt.

Insbesondere im Fall, dass in der technischen Anlage standardisierte Komponenten, wie z. B. Messfühler oder Motoren, integriert sind, bei denen im vorgesehenen Anwendungszweck von den standardmäßig vorgesehenen Steuerungs- und/oder Regelungsfunktionen abweichende Eigenschaften oder zusätzliche Funktionen ausgeführt werden, werden die Funktionsbausteine FB1 bis FBn ineinander verschachtelt. Dazu wird mittels des betreffenden Funktionsbausteins FB1 in der Art einer Subsubroutine ein weiterer Funktionsbaustein FB2 oder Unterfunktionsbaustein aufgerufen. Beispielsweise sind derartige Funktionen Sicherheitsabfragen oder Prioritäten, wie z. B. "Notaus"-Funktion oder "Notein"-Funktion. Je nach Art und Ausführung des Datenverarbeitungsprogramms 2 können die zusätzlichen Funktionen durch einen den standardmäßigen Funktionsbaustein FB4 ummantelnden Funktionsbaustein FB3 ausgeführt sein, der nach Aufruf durch das Datenverarbeitungsprogramm 2 dann den standardmäßigen Funktionsbaustein FB4 aufruft oder umgekehrt durch die Form der abgestuften Subsubroutine, die im Beispiel des Funktionsbausteins FB1 mit nachgehängtem Unterfunktionsbaustein FB2 ausgeführt ist.

Zur Bearbeitung der Steuerungs- und/oder Regelungsfunktionen der Funktionsbausteine FB1 bis FBn werden diese ausgangsseitig mit zugehörigen Daten D(FB1) bis D(FBn) mittels des Datenverarbeitungsprogramms 2 versorgt. Die Daten D(FB1) bis D(FBn) sind beispielsweise Betriebsparameter, Eingangs- oder Ausgangsparameter.

Der Funktionsbaustein FB1, welcher beispielsweise zur Steuerung eines Motors dient, umfasst als Daten D(FB1) die Eingangsparameter "Motor - ein" oder "Motor - aus" (wobei diese Signale Sensorsignale sind, die den Betriebszustand des Motors beschreiben) und die Ausgangsparameter "Motor - EIN" oder "Motor - AUS" (wobei diese Signale Schaltsignale sind, die den Schaltvorgang des Motors beschreiben). Je nach Art und Ausführung des Datenverarbeitungsprogramms 2 und der Funktionalität des Funktionsbausteins FB1 zur Motorsteuerung kann dieser um Sicherheitsfunktionen ergänzt werden, die mittels des integrierten Funktionsbausteins FB2 ausgeführt werden. Beispielsweise umfasst der Funktionsbaustein FB2 die "Notaus"-Funktion für die Motorsteuerung. Zur Bearbeitung der "Notaus"-Funktion des Funktionsbausteins FB2 sind entsprechende Daten D(FB2), z. B. Eingangsparameter "Motorkühlung - defekt" oder "Ölpumpe - defekt" und Ausgangsparameter "Motor - Notaus" erforderlich.

Diese bausteinrelevanten Daten D(FB1), D(FB2), D(FB3), D(FB4) werden mittels des Datenverarbeitungsprogramms 2 mit einem zugehörigen Adresszeiger Z1, Z2, Z3 bzw. Z4 verknüpft. Beim Aufruf des betreffenden Funktionsbausteins FB1 mit angehängten Unterfunktionsbaustein FB2 bzw. beim Aufruf des den Funktionsbaustein FB4 ummantelnden Funktionsbausteins FB3 werden die jeweils zugehörigen Daten D(FB1) bis D(FB4) anhand des zugehörigen Adresszeigers Z1 bis Z4 bausteinabhängig in einem dem betreffenden Funktionsbaustein FB1 bis FB4 zugehörigen Speicherplatz S(FB1) bis S(FB4) hinterlegt. Somit werden mittels des Datenverarbeitungsprogramms 2 anhand des jeweiligen Adresszeigers Z2 oder Z4 die relevanten Daten D(FB2) bzw. D(FB4) direkt in dem den Unterfunktionsbaustein FB2 bzw. FB4 zugehörigen Speicherplatz S(FB2) bzw. S(FB4) hinterlegt. Hierdurch erfolgt eine direkte Zuordnung der bausteinrelevanten Daten D(FB1), D(FB2), D(FB3) D(FB4) zu dem betreffenden Speicherplatz S(FB1), S(FB2), S(FB3), S(FB4) der zugehörigen Funktionsbausteine FB1 bis FB4. Ein mehrfaches Kopieren mit der dafür erforderlichen Speicherkapazität zum Zwischenspeichern der Daten D(FB1), D(FB2), D(FB3), D(FB4) entfällt.

Je nach Art und Ausführung des Datenverarbeitungsprogramms 2 werden mittels des Adresszeigers Z1 bis Z4 nur jene bausteinrelevanten Daten D(FB1) bis D(FB4) in die bausteinspezifischen Speicherplätzen S(FB1) bis S(FB4) hinterlegt, welche nicht durch einen vorangegangenen Funktionsbaustein FB1 oder FB3 verändert oder modifiziert worden sind. Die Daten D(FB1) bis D(FB4), welche bei der Bearbeitung im vorangegangenen Funktionsbaustein FB1 oder FB3 modifiziert werden, werden sowohl im bausteinspezifischen Speicherplatz S(FB1) oder S(FB3) des vorangegangenen Funktionsbausteins FB1 bzw. FB3 als auch im bausteinspezifischen Speicherplatz S(FB2) oder S(FB4) des nachfolgenden oder integrierten Funktionsbausteins FB2 bzw. FB4 hinterlegt. Durch eine derartige Unterscheidung von modifizierten und nicht modifizierten Daten D(FB1) bis D(FB4) und eine davon abhängige bausteinspezifische Speicherung dieser in bausteinrelevanten Speicherplätzen S(FB1) bis S(FB4) ist das Datenverarbeitungsprogramm 2 im Hinblick auf die Gesamtlaufzeit gegenüber der Gesamtlaufzeit eines gleichen Programms im Stand der Technik weitmöglichst um bis zu 75% verbessert. Die Datenverarbeitungsanlage 1 weist darüber hinaus einen effektiv genutzten Datenspeicher auf.

## Patentansprüche

1. Verfahren zur Verarbeitung von Daten (D) einer Datenverarbeitungsanlage (1) mit einem Datenverarbeitungsprogramm (2), welches zur Bearbeitung von Standardfunktionen eine Mehrzahl von Funktionsbausteinen (FB1 bis FBn) umfasst, wobei mindestens einem der Funktionsbausteine (FB1, FB3) ein Unterfunktionsbaustein (FB2, FB4) zur Bearbeitung von einer Kernfunktionen zugeordnet ist, wobei beim Aufruf des Funktionsbausteins (FB1, FB3) für diesen bestimmte Eingangsdaten (D(FB1), D(FB3)) und für den Unterfunktionsbaustein (FB2, FB4) bestimmte Eingangsdaten (D(FB2), D(FB4)) mittels des Datenverarbeitungsprogramms (2) jeweils bausteinabhängig in getrennten Speicherplätzen (S(FB1) bis S(FB4)) hinterlegt werden.

2. Verfahren nach Anspruch 1, bei dem die Daten (D(FB1) bis D(FBn)) mittels des Datenverarbeitungsprogramms (2) mit einem zugehörigen Adresszeiger (Z1 bis Zn) verknüpft werden.

3. Verfahren nach Anspruch 1 oder 2, bei dem mittels des Datenverarbeitungsprogramms (2) beim Aufruf des Funktionsbaustein (FB1, FB3) die Eingangsdaten (D(FB1) bis D(FB4)) anhand des zugehörigen Adresszeigers (Z1 bis Z4) bausteinabhängig in einem dem Funktionsbaustein (FB1, FB3) bzw. dem Unterfunktionsbaustein (FB2, FB4) zugeordneten Speicherplatz (S(FB1) bis S(FB4) hinterlegt werden.

4. Verfahren nach einem der Ansprüche 1 bis 3, bei dem mittels des Datenverarbeitungsprogramms (2) die Daten (D(FB2), D(FB4)) des Unterfunktionsbausteins (FB2, FB4) direkt in einem diesem zugehörigen Speicherplatz (S(FB2), S(FB4)) hinterlegt werden.

5. Datenverarbeitungsanlage (1) mit einem Datenverarbeitungsprogramm (2), welches zur Bearbeitung von Standardfunktionen eine Mehrzahl von Funktionsbausteinen (FB1 bis FBn) umfasst, wobei mindestens einem der Funktionsbausteine (FB1, FB2) ein Unterfunktionsbaustein (FB2, FB4) zur Funktionserweiterung umfasst, wobei bausteinabhängig der Funktionsbaustein (FB1, FB3) und der weitere Funktionsbaustein (FB2, FB4) jeweils einen zugehörigen Speicherplatz (S(FB1) bis S(FB4)) umfassen, an die das Datenverarbeitungsprogramms (2) beim Aufruf des Funktionsbausteins (FB1, FB3) bausteinabhängig Eingangsdaten (D(FB1) bis D(FB2)) übergibt.
